Europäisches Patentamt

European Patent Office

Office européen des brevets

(11) Veröffentlichungsnummer: **0 380 042**
**A2**

(12) **EUROPÄISCHE PATENTANMELDUNG**

(21) Anmeldenummer: **90101263.3**

(22) Anmeldetag: **23.01.90**

(51) Int. Cl.⁵: **H01B 17/58**

(30) Priorität: **24.01.89 DE 8900748 U**

(43) Veröffentlichungstag der Anmeldung:
**01.08.90 Patentblatt 90/31**

(84) Benannte Vertragsstaaten:
**AT BE DE ES FR GB IT SE**

(71) Anmelder: **Kabelwerke Reinshagen GmbH**
**Reinshagenstrasse 1**
**D-5600 Wuppertal 21(DE)**

(72) Erfinder: **Lamers, Joachim, Dipl.-Ing.**
**Collenbuschstrasse 20**
**D-5600 Wuppertal 2(DE)**
Erfinder: **Illemann, Wolfgang**
**Monhofsfeld 129**
**D-5600 Wuppertal 21(DE)**

(74) Vertreter: **Priebisch, Rüdiger, Dipl.-Ing.,**
**Dipl.-Wirtsch.-Ing. (FH)**
**Kabelwerke Reinshagen GmbH**
**Patentabteilung Reinshagenstrasse 1**
**D-5600 Wuppertal 21(DE)**

(54) **Durchführungstülle.**

(57) Eine Durchführungstülle (1) aus elastischem Material ist auf ein Kabel (2) oder dergleichen rundum aufgespritzt. Neben dem Kabel (2) ist eine Öffnung (7) vorgesehen, die entweder von einer dünnen Membranhaut (8) oder von einem eingesetztem Stopfen (12) verschlossen ist, der wiederum rundum ein weiteres Kabel oder dergleichen (11) aufgespritzt ist. Die Durchführungstülle (1) findet vorzugsweise Anwendung bei einem aus Teilkabelsätzen zusammengesetzten Kabelsatz, wie er insbesondere bei Kraftfahrzeugen eingesetzt wird.

FIG. 8

## Durchführungstülle

Die Erfindung betrifft eine Durchführungstülle, die aus einem elastischen Material, wie Kunststoff oder Gummi, auf mindestens ein elektrisches Kabel, Leitungsbündel oder dergleichen rundum aufgespritzt ist,vergleiche DE-A-1 540 461,Figur 7.

Der Erfindung liegt das Besteben zugrunde, ein wahlweises oder nachträgliches Einziehen von zusätzlichen Leitungen oder dergleichen zu ermöglichen, insbesondere das Einziehen von beidendig mit Steckverbindern versehenen Leitungsbündeln, die auch als Leitungssätze bezeichnet werden.

Diese Aufgabe wird dadurch gelöst, daß im Querschnittsbereich der Tülle neben dem vom umspritzten Material umgebenen Kabel eine weitere, als Durchgangsöffnung vorgesehene Öffnung angeordnet ist, die von einer dünnen Membranhaut des gespritzten Materials verschlossen ist. Vorzugsweise ist das Kabel in der einen Querschnittshälfte und die Öffnung in der anderen Querschnittshälfte der Tülle angeordnet. Eine gute Anpassung an die jeweilig verlangte Leitungsführung ist erzielbar, wenn das Kabel innerhalb der Tülle seine Richtung, vorzugsweise um 90°, ändert und aus einem mitangespritzten, das Kabel umgebenden Ansatz der Tülle austritt. Eine gute und dauerhafte Abdichtung, sowie eine gewisse Material- und Gewichtersparnis ist dadurch erzielt, daß als elastisches Material geschäumtes Polyurethan verwendet ist. Die Abdichtwirkung wird weiterhin dadurch unterstützt, daß die Tülle einen äußeren, umlaufenden Dichtkkragen und eine entsprechende radiale Nut zur Aufnahme der Tülle in einer Öffung einer Wand, insbesondere einer Karrosserieöffnung eine Kraftfahrzeuges, aufweist. Während bei den vorgenannten Ausführungen die Tülle zur Nachrüstung vorbereitet ist, können bei den nachfolgenden Ausführungen insbesondere zusätzliche konfektionierte Leitungen bzw. Leitungssätze montiert sein, z.B. bei einem Kraftfahrzeug mit umfangreicher Verdrahtung. Hierzu ist die eingangs genannte Durchführungstülle so ausgebildet, daß im Querschnittsbereich der Tülle neben dem vom gespritzten Material umgebenen Kabel oder dergleichen eine Durchgangsöffnung angeordnet ist, in die ein um ein zweites Kabel oder dergleichen rundum aufgespritzter Stopfen eingebracht ist. Vorzugsweise sind das erste Kabel oder dergleichen in der einen Querschnittshälfte und der Stopfen mit dem zweiten Kabel oder dergleichen in der anderen Querschnittshälfte der Tülle angeordnet. Auch hier kann den Einbauverhältnissen gut Rechnung getragen werden, wenn das erste und/oder das zweite Kabel oder dergleichen innerhalb der Tülle bzw. des Stopfens seine Richtung, vorzugsweise um 90°, ändert.Aus den schon genannten Gründen wird vorzugsweise mindestens für den Tüllenhauptkörper, gegebenenfalls auch für den Stopfen, als elastisches Material geschäumtes Polyurethan oder ein anderer Kunststoff verwendet. Wie schon erwähnt, wird die gut Abdichtung dadurch gesichert, daß die Tülle eine äußeren, umlaufenden Dichtkragen und eine entsprechende radiale Nut zur Aufnahme der Tülle in einer Öffnung einer Wand, insbesondere einer Karrosserieöffnung eines Kraftfahrzeugs, aufweist. Zum gleichen Zweck ist der Stopfen mit Ringzähnen in die Durchgangsöffnung eingesetzt. Eine gut Verspannung des Stopfens ist erzielt, indem der Stopfen pilzförmig ausgebildet ist und auf sein Stielende ein Ringstopfen aufgeschoben ist, der den Stopfen in der Tülle verspannt. Die Vorteile der erfindungsgemäßen Tülle kommen voll zur Geltung,wenn sie bei einem aus Teilkabelsätzen bestehenden Kabelsatz, insbesondere für Kraftfahrzeuge, verwendet wird, sei es in der vorbereiteten oder nachgerüsteten Form.

Die erfindungsgemäße Durchführungstülle ist sehr flexibel einsetzbar, da sie den Einbauverhältnissen, z.B. Einbautiefe, durch Anpassung der Formen der Tülle bzw. der Stopfen leicht Rechnung tragen kann.Neben der beschriebenen Ausführungsform können auch mehr als eine Öffnung mit einer Membranhaut oder mit einem Stopfen verschlossen sein, so daß sich viele bauliche Variationen verwirklichen lassen.

In der Zeichnung sind Ausführungsbeispiele der Erfindung dargestellt,die im nachfolgenden näher beschrieben sind.

Figur 1 zeigt eine Durchführungstülle in Draufsicht mit umspritztem Kabel, Bündel oder Kabelsatz.

Figur 2 zeigt die Tülle nach Figur 1 in Seitenansicht.

Figur 3 zeigt den Schnitt A-A in Figur 1.

Figur 4 zeigt einen Stopfen in der Draufsicht mit umspritztem Kabel, Bündel oder Kabelsatz.

Figur 5 zeigt den Stopfen nach Figur 4 im Schnitt.

Figur 6 zeigt einen Stopfenring in Seitenansicht.

Figur 7 zeigt den Stopfenring nach Figur 6 im Schnitt A-A.

Figur 8 zeigt eine teilweise geschnittene Tülle, bei welcher der Stopfen, gegebenenfalls nach Entfernen einer Membranhaut, in die Öffnung der Tülle und diese wiederum in die Öffnung eines Karrosserieblechs eingesetzt ist.

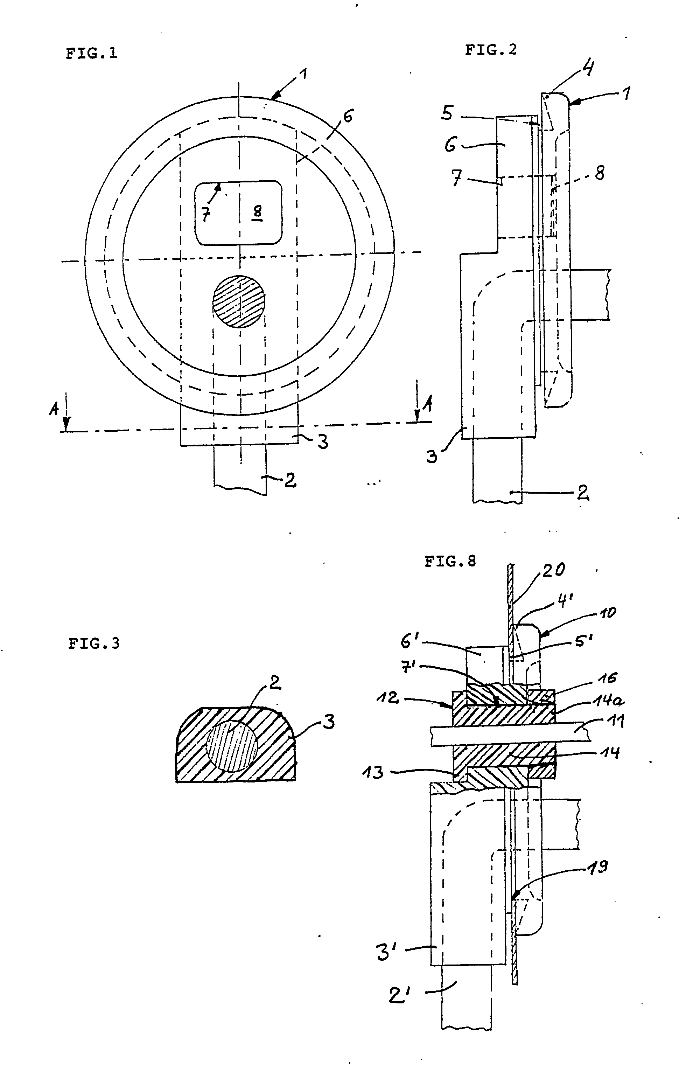

Während die Tülle und evtl. der Stopfen aus weichelastischem Kunststoff oder Gummi gebildet sein können, kann der Stopfenring auch aus härterem Kunststoff geformt sein, um die Anpreßoder Verriegelungskräfte sicherzustellen. Die Durchführungstülle 1, siehe Figuren 1 bis 3, ist aus einem elastischen, geschäumten Polyurethan um ein Kabel 2, Leitungsbündel oder dergleichen herumgespritzt. Das Kabel 2 ist in der unteren Hälfte des Querschnittsbereiches der hier rund ausgebildeten Tülle 1 angeordnet, tritt dabei rechter Hand (Figur 2) axial in die Tülle 1 ein, ändert innerhalb der Tülle 1 die Richtung um 90° und tritt unten radial aus einem das Kabel 2 umgebenden Ansatz 3 aus. Am äußeren Rand der Tülle 1 ist ein umlaufender Dichtkragen 4 angeformt, der mit Hilfe einer radialen Nut 5 in eine weiter unten beschriebene Wandöffnung dichtend eingesetzt ist.In der oberen Hälfte des Querschnittsbereiches der Tülle 1 setzt sich der Ansatz 3 mit verminderter Dicke als Rippe 6 fort. Hier ist eine Öffnung 7 eingeformt, die rechter Hand (Figur 2) von einer dünnen Membranhaut 8 des gespritzten Materials verschlossen ist.

In Figur 8 ist eine Tülle der beschriebenen Art gezeigt, bei der ein zusätzliches Kabel 11 oder dergleichen durch die Tülle geführt ist. Gleichartige Teile sind mit gleichem Bezugszeichen, ergänzt mit einem Index, versehen.

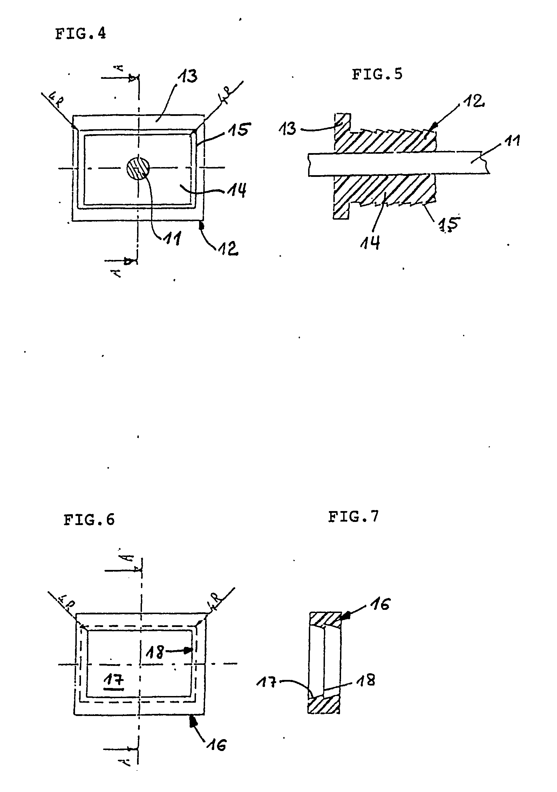

Zur Aufnahme des zusätzlichen Kabels 11 oder dergleichen ist entweder die schon beschriebene Membranhaut 8 entfernt worden, oder sie wurde erst gar nicht angespritzt, was nur eine geringfügige Änderung des Spritzwerkzeugs erfordert.Die Durchführung des zusätzlichen Kabels 11 erfolgt mit Hilfe eines Stopfens 12, der im einzelnen in den Figuren 4 bis 7 dargestellt ist.

Der Stopfen 12, siehe Figur 5, ist ringsum das Kabel 11 aus geschäumtem Polyurethan aufgespritzt und pilzförmig mit flachem Kopf 13 und einem mit radialen, dichtenden Ringzähnen 15 versehen, verdickten Stiel 14 ausgebildet. Gemäß diesem Ausführungsbeispiel weist der Stopfen 12 in Anpassung an die zugeordnete Öffnung in der Tülle 10 einen rechteckigen Querschnitt auf, vergleiche Figur 4. Sie kann in einer anderen Ausführung im Durchmesser auch anders, insbesondere rund, ausgebildet sein.

Entsprechend dem Stopfen 12 angepaßt ist ein Stopfenring 16 gebildet, siehe Figuren 6 und 7. Der Stopfenring 16 ist aus hartem Material, z.B.Polyamid, geformt und umfaßt eine Durchgangsöffnung 17 mit umlaufenden, sägezahnförmigen Erhebungen 18, siehe Figur 7. Der Stopfenring 16 paßt unter leichter Preßpassung genau auf den Stiel 14 des Stopfens 12.

In Figur 8 ist der pilzförmige Stopfen 12 zusammen mit dem umspritzten zweiten Kabel 11 mit seinem Stiel 14 im Bereich der Rippe 6′ durch die freie Öffnung 7′ der Tülle 10 geschoben, bis der Kopf 13 an die Tülle 10 zur Anlage kam. Auf das Stielende 14a ist der Stopfenring 16 bis zur Anlage an die Tülle 10 aufgeschoben. Dabei verspannt sich der Stopfen 12 innerhalb der Öffnung 7′ und dichtet diese mit hilfe der Ringzähne 15 ab. Der Stopfenring 16 verkrallt sich mit den sägezahnförmigen Erhebungen 18 auf dem Stielende 14a, so daß eine dauerhafte und sichere Abdichtung gewährleistet ist.Die Tülle 10 ist in Figur 8 mit ihrem äußeren, axial umlaufenden Dichtkragen 4′ und ihrer radialen Nut 5′ in eine Öffnung 19 eines Karrosserieblechs 20 dichtend eingesetzt.

Neben der Beschriebenen Ausführung können auch mehr als eine Öffnung 7 bzw 7′ mit einer Membranhaut 8 und/ oder mit einem Stopfen 12 verschlossen sein.

Bezugszeichenliste

1 Durchführungstülle
2, 2′ Kabel, Leitungsbündel oder Kabelsatz
3, 3′ Ansatz
4, 4′ Dichtkragen
5, 5′ Nut
6, 6′ Rippe
7, 7′ Öffnung
8 Membranhaut
10 Durchführungstülle
11 Kabel, Leitungsbündel oder Kabelsatz
12 Stopfen
13 Kopf
14 Stiel
14a Stielende
15 Ringzähne
16 Stopfenring
17 Durchführungsöffnung
18 Erhebungen
19 Öffnung
20 Wand

**Ansprüche**

1. Durchführungstülle, die aus einem elastischen Material, wie Kunststoff oder Gummi, auf mindestens ein elektrisches Kabel, Leitungsbündel oder dergleichen rundum aufgespritzt ist, dadurch gekennzeichnet, daß im Querschnittsbereich der Tülle (1) neben dem vom gespritzten Material umgebenen Kabel (2) eine weitere,als Durchgangsöffnung vorgesehene Öffnung (7) angeordnet ist, die von einer dünnen Membranhaut (8) des gespritztn Materials verschlossen ist.

2. Tülle nach Anspruch 1, dadurch gekennzeichnet, daß das Kabel (2) in der einen Querschnittshälfte und die Öffnung (7) in der anderen Querschnittshälfte der Tülle (1) angeordnet sind.

3. Tülle nach Anspruch 1 oder 2, dadurch gekennzeichnet, daß das Kabel (2) innerhalb der Tülle (1) seine Richtung, vorzugsweise um 90°, ändert und aus einem mitangespritzten, das Kabel (2) umgebenden Ansatz (3) der Tülle (1) austritt.

4. Tülle nach einem der vorstehenden Ansprüche, dadurch gekennzeichnet, daß als elastisches Material geschäumtes Material, insbesondere geschäumtes Polyurethan, verwendet ist.

5. Tülle nach einem der vorstehenden Ansprüche, dadurch gekennzeichnet, daß sie einen äußeren, umlaufenden Dichtkragen (4) und eine entsprechende radiale Nut (5) zur Aufnahme der Tülle (1) in einer Öffnung (19) einer Wand (20), insbesondere einer Karrosserieöffnung eines Kraftfahrzeuges, aufweist.

6. Durchführungstülle, die aus einem elastischen Material, wie Kunststoff oder Gummi, auf mindestens ein elektrisches Kabel, Leitungsbündel oder dergleichen rundum aufgespritzt ist, dadurch gekennzeichnet, daß im Querschnittsbereich der Tülle (10) neben dem vom gespritzten Material umgebenen Kabel (2') eine Durchgangsöffnung (7') angeordnet ist, in die ein um ein zweites Kabel (11), Leitungsbündel oder dergleichen rundum aufgespritzter Stopfen (12) eingebracht ist.

7. Tülle nach Anspruch 6, dadurch gekennzeichnet, daß das erste Kabel (2') oder dergleichen in der einen Querschnittshälfte und der Stopfen (12) mit dem zweiten Kabel in der anderen Querschnittshälfte der Tülle (10) angeordnet sind.

8. Tülle nach Anspruch 6 oder 7, dadurch gekennzeichnet, daß das erste (2') und/oder das zweite Kabel (11) oder dergleichen innerhalb der Tülle (10) bzw. des Stopfens (12) seine Richtung, vorzugsweise um 90°, ändert.

9. Tülle nach einem der Ansprüche 6 bis 8, dadurch gekennzeichnet, daß als elastisches Material geschäumtes Material, insbesondere geschäumtes Polyurethan, verwendet ist.

10. Tülle nach einem der Ansprüche 6 bis 9, dadurch gekennzeichnet, daß sie einen äußeren, umlaufenden Dichtkragen (4') und eine entsprechende radiale Nut (5') zur Aufnahme der Tülle (10) in einer Öffnung (19) einer Wand (20), insbesondere einer Karrosserieöffnung eines Kraftfahrzeuges, aufweist.

11. Tülle nach einem der Ansprüche 6 bis 10, dadurch gekennzeichnet, daß der Stopfen (12) mit Ringzähnen (15) in die Durchgangsöffung (7') eingesetzt ist.

12. Tülle nach einem der Ansprüche 6 bis 11, dadurch gekennzeichnet, daß der Stopfen (12) pilzförmig ausgebildet ist und auf sein Stielende (14a) ein Ringstopfen (16) aufgeschoben ist, der den Stopfen (12) in der Tülle (10) verspannt.

13. Kabelsatz oder Teilkabelsatz, insbesondere für Kraftfahrzeuge, dadurch gekennzeichnet, daß er mit mindestens einer Durchführungstülle (1) nach einem der Ansprüche 1 bis 5 versehen ist.

14. Kabelsatz oder Teilkabelsatz, insbesondere für Kraftfahrzeuge, dadurch gekennzeichnet, daß er mit mindestens einer Durchführungstülle (10) nach einem der Ansprüche 6 bis 12 versehen ist.

FIG.1

FIG.2

FIG.3

FIG.8

FIG.4

FIG.5

FIG.6

FIG.7